# FASCICULE DE BREVET EUROPEEN

(11) **EP 0 347 268 B1**
(45) Date de publication et mention de la délivrance du brevet: **30.11.1994**
(21) Numéro de dépôt: 89401322.6
(22) Date de dépôt: 11.05.1989
(51) Int. Cl.: H01Q 1/12, F16B 39/24

(54) **Dispositif pour fixer une embase d'antenne sur une paroi métallique recouverte d'une couche protectrice isolante**
Vorrichtung zum Befestigen der Bodenplatte einer Antenne auf einer mit einer isolierenden Schutzschicht bedeckten metallischen Wand
Mounting device for an aerial base-plate on a metallic wall, covered with an isulating protective layer

(30) Priorité: 18.05.1988 FR 8806628
(43) Date de publication de la demande: 20.12.1989
(73) Titulaire: MECANIPLAST, F-92110 Clichy (FR)
(72) Inventeur: Pizon, Ernest, F-92210 Saint-Cloud (FR)
(74) Mandataire: Peuscet, Jacques

(56) Documents cités:
- DE-A- 1 400 872
- DE-A- 1 475 038
- DE-U- 6 752 757
- FR-A- 1 225 820
- FR-A- 1 413 638
- FR-A- 2 563 946

## Description

La présente invention concerne un dispositif pour fixer une embase d'antenne sur une paroi métallique recouverte d'une couche protectrice isolante.

Lorsqu'on installe un poste autoradio ou un radiotéléphone, ou de façon plus générale un appareil de télécommunication, à bord d'un mobile tel qu'un véhicule automobile, il est nécessaire d'installer une antenne à l'extérieur du mobile et portée par ce dernier. Dans le cas d'une automobile de tourisme, l'antenne est généralement disposée sur une aile, avant ou arrière, ou sur le toit. Pour ce faire, il est nécessaire de percer la tôle de la carrosserie afin de fixer l'embase de cette antenne, et de mettre à la masse la tresse du câble coaxial de liaison afin notamment d'éviter toute perturbation dans la réception ou l'émission des signaux radio-électriques.

Cette mise à la masse est réalisée tout simplement en créant une continuité électrique entre la tôle de la carrosserie et la tresse grâce à une rondelle dentée métallique, traversée par la tige de l'embase d'antenne et prenant appui sur la tôle. Mais, comme l'installation d'une telle antenne a lieu après peinture de la carrosserie, et même parfois après la vente du véhicule, la rondelle dentée pour être au contact de la tôle doit comporter des moyens permettant d'établir à coup sûr le contact de masse.

Un dispositif pour fixer une telle embase d'antenne, selon FR-A-1 225 820 comprend une rondelle métallique qui est munie de dents, traversée par la tige de l'embase d'antenne et qui doit être en contact avec la paroi métallique, et un organe de serrage pour appliquer cette rondelle dentée contre cette même paroi métallique.

DE-A-1 400 872 montre une rondelle bombée munie de dents s'étendant parallèlement à l'axe de la rondelle et présentant des pointes.

Les dents attaquent la surface d'appui suivant une direction sensiblement orthogonale à cette surface d'appui et ne présentent pratiquement pas d'élasticité.

Les dispositifs de l'art antérieur ont notamment pour inconvénient d'écraser les dents de la rondelle contre la paroi, de telle sorte que les dents ne percent pas, ou à tout le moins imparfaitement, la couche protectrice de peinture revêtant cette paroi métallique ou endommagent même cette paroi : dans ce dernier cas, il existe un risque important qu'apparaissent des points de corrosion dommageables à cet endroit.

FR-A-1 413 638 concerne une rondelle agencée pour s'opposer à un desserrage mécanique.

Aucune indication n'est fournie à propos de l'établissement d'un contact électrique entre cette rondelle et une paroi d'appui qui serait recouverte d'une couche isolante.

Un des buts de la présente invention est de fournir un dispositif pour fixer une embase d'antenne, reliée à un appareil de télécommunication, sur une paroi métallique, comprenant une rondelle dentée, de telle sorte que les dents percent la couche protectrice recouvrant la paroi afin de venir au contact de cette paroi sans la rayer de manière dommageable ou sans s'écraser contre elle.

Un autre but de l'invention est de fournir une rondelle dentée pour un tel dispositif.

Ces buts, ainsi que d'autres qui apparaîtront par la suite, sont atteints par un dispositif pour fixer une embase d'antenne, notamment pour un appareil de télécommunication tel qu'un poste autoradio, sur une paroi métallique recouverte d'une couche protectrice isolante, cette embase d'antenne comprenant une tige propre à traverser un trou de la paroi, ledit dispositif comprenant une rondelle dentée métallique, traversée par cette tige et destinée à établir un contact de masse avec la paroi métallique, cette rondelle comprenant des dents qui s'étendent radialement, un organe de serrage étant prévu pour maintenir l'ensemble sur la paroi en réponse à un effort de traction exercé sur la tige, par un moyen de fixation coopérant avec cette tige du côté de la paroi opposé à cette embase d'antenne, lequel dispositif est caractérisé par le fait que chaque dent de la rondelle présente une pointe, dont l'inclinaison par rapport au plan moyen de la rondelle dentée est supérieure à l'inclinaison du reste de la dent, du côté d'application contre la paroi, et que des moyens d'appui sont prévus sur au moins l'un des deux éléments constitués par la rondelle et l'organe de serrage, ces moyens d'appui ayant une épaisseur telle que lorsque la rondelle dentée est appliquée contre la paroi, un espace libre subsiste entre la paroi et la face en regard de l'organe de serrage afin de permettre une déformation élastique en flexion de la partie de la dent dont l'extrémité se termine par la susdite pointe, sans qu'il y ait blocage de cette partie entre l'organe de serrage et la paroi.

Avantageusement, la rondelle dentée et l'organe de serrage sont situés du côté de la paroi opposé à l'embase d'antenne, et les dents s'étendent radialement vers l'extérieur, la pointe de chaque dent constituant ainsi l'extrémité radiale extérieure de cette dent.

Les moyens d'appui ne débordent pas au-delà de la ligne passant par les racines des dents de telle sorte que les dents puissent fléchir sur toute leur longueur.

De préférence, l'organe de serrage comprend une bague, en matière isolante, traversée par la tige et le moyen d'appui est constitué par une collerette, faisant saillie parallèlement à la direction axiale sur la face transversale de la bague tournée vers la rondelle, cette saillie étant prévue sur le bord périphérique interne de la bague et propre à prendre appui contre la rondelle proprement dite, les dents de la rondelle étant situées radialement à l'extérieur de la collerette au niveau d'un évidement annulaire ainsi défini par la collerette.

Avantageusement, selon un autre mode de réalisation de la présente invention, les moyens d'appui sont constitués par des surépaisseurs prévues sur la rondelle dentée elle-même, dans une zone annulaire située radialement à l'intérieur des dents. Les surépaisseurs sont situées entre la paroi et la rondelle, c'est-à-dire du même côté de la dent que la pointe de cette dent. Ces surépaisseurs sont constituées par des languettes, solidaires de la rondelle dentée et rabattues contre le plan de la rondelle dentée ; ces languettes sont reliées au bord de l'ouverture de la rondelle et sont rabattues vers l'extérieur.

La surépaisseur, constituant le moyen d'appui, est, selon un autre exemple de réalisation, formée par au moins une zone emboutie de la région annulaire de la rondelle dentée. Cette zone emboutie peut former un anneau circulaire. Ces moyens d'appui peuvent également être constitués par plusieurs zones, en particulier quatre zones, embouties orientées radialement, prévues dans la partie annulaire de la rondelle dentée et situées angulairement entre des dents.

Avantageusement, chaque dent présente deux zones sensiblement planes, la première zone s'étendant entre la partie annulaire et la pointe, et ayant une première inclinaison par rapport au plan moyen de la rondelle, la deuxième zone constituant la pointe et ayant une inclinaison plus importante.

Selon un autre mode de réalisation de la présente invention, chaque dent de la rondelle a une ligne moyenne courbe dont la concavité est destinée à être tournée du côté de la paroi.

Ainsi qu'il a été dit précédemment, la présente invention est également relative à une rondelle dentée pour un dispositif tel que décrit précédemment. Cette rondelle dentée, de préférence, comporte sur sa partie annulaire une surépaisseur obtenue en particulier par rabattement d'une languette, ou par un embouti.

La description, qui va suivre et qui ne présente aucun caractère limitatif, doit être lue en regard des figures annexées, parmi lesquelles :
- la figure 1 représente en coupe verticale un dispositif pour fixer une embase d'antenne, selon la présente invention, en combinaison avec l'embase d'antenne et une paroi métallique ;
- la figure 2 est une vue en coupe verticale du dispositif représenté à la figure 1, avant mise en place d'une embase d'antenne et avant serrage contre la paroi ;
- la figure 3 est une vue de dessus d'une rondelle dentée métallique pour un dispositif selon un premier exemple de réalisation de la présente invention ;
- la figure 4 est une vue partielle d'un premier mode de réalisation des dents de la rondelle selon la figure 3 ;
- la figure 5 est une vue partielle d'un second mode de réalisation des dents de la rondelle selon la figure 3 ;
- la figure 6 est une vue de dessus d'un deuxième exemple de réalisation d'une rondelle dentée pour un dispositif selon la présente invention ;
- la figure 7 est une vue en coupe selon la ligne VII-VII de la figure 6, la rondelle dentée étant en place contre une paroi ;
- la figure 8 est une vue de dessus d'un quatrième exemple de réalisation d'une rondelle dentée selon la présente invention ;
- la figure 9 est une vue en coupe selon la ligne IX-IX de la figure 8, la rondelle dentée étant en place contre une paroi ;
- la figure 10̸, enfin, est une vue de dessus d'un cinquième exemple de réalisation d'une rondelle dentée.

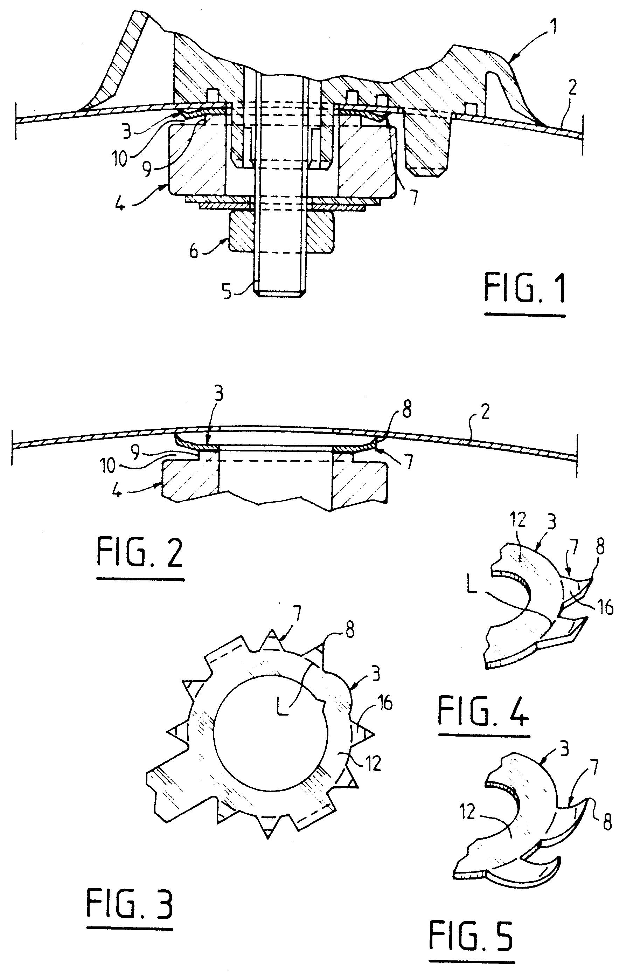

Ainsi qu'on peut le voir sur la figure 1, un dispositif pour fixer une embase 1 d'antenne, notamment pour un appareil de télécommunication tel qu'un poste autoradio, sur une paroi métallique 2 recouverte d'une couche protectrice isolante, comprend notamment une rondelle dentée 3 métallique et destinée à établir un contact de masse avec la paroi métallique 2. Ce dispositif comprend également un organe de serrage 4.

L'embase 1 d'antenne est disposée de l'autre côté de la paroi métallique par rapport à la rondelle dentée métallique 3 et à l'organe de serrage 4. Cette embase d'antenne 1 comprend notamment une tige 5, qui traverse un trou ménagé dans la paroi 2 ; l'embase d'antenne, ainsi que son mode de fixation sur la paroi métallique, ne seront pas décrits plus avant puisqu'ils sont bien connus de l'homme du métier.

L'organe de serrage 4 est prévu pour appliquer la rondelle dentée 3 contre la paroi 2 en réponse à un effort de traction exercé sur la tige 5 par un moyen de fixation 6, constitué le plus souvent par un écrou coopérant avec cette tige 5, filetée, du côté de la paroi 2 opposé à l'embase d'antenne 1. En vissant l'écrou 6 sur la tige 5 on applique donc l'organe de serrage 4 contre la rondelle dentée métallique 3, de telle sorte que les dents 7, que comporte cette rondelle 3 à sa périphérie, viennent au contact de la tôle métallique 2 après avoir percé la couche protectrice isolante recouvrant cette paroi.

Comme représenté sur les figures 4 et 5, chaque dent 7 de la rondelle 3 présente une pointe 8 dont l'inclinaison, par rapport au plan moyen de la rondelle, est supérieure à l'inclinaison du reste de la dent, du côté d'application contre la paroi 2. Selon l'invention, des moyens d'appui sont prévus sur la rondelle ou sur l'organe de serrage : ces moyens d'appui ont une épaisseur telle que lorsque le serrage de la rondelle 3 est réalisé contre la paroi 2, un espace libre subsiste entre la paroi 2 et la face en regard de l'organe de serrage 4, afin de permettre une déformation élastique en flexion de la partie de la dent 7 dont l'extrémité se termine par la pointe 8, sans qu'il y ait blocage de cette partie entre l'organe de serrage 4 et la paroi 2.

Selon un premier exemple de réalisation de la présente invention, représenté aux figures 1 et 2, les moyens d'appui sont constitués par une collerette 9 qui fait saillie parallèlement à la direction axiale, sur la face transversale de la bague 4, constituant l'organe de serrage, tournée vers la rondelle dentée 3. Cette collerette 9 est située sur le bord périphérique interne de la bague 4 : elle prend donc appui contre la rondelle dentée 3 proprement dite, les dents 7 de la rondelle 3 étant situées radialement à l'extérieur de cette collerette. Cette collerette 9 ne déborde pas au-delà de la ligne (figure 4), constituée par un cercle, passant par les racines des dents 7. Un évidement annulaire 10̸ entre la paroi métallique 2 et la rondelle 3 se forme, lorsqu'on vient presser la bague 4 en direction de cette tôle 2. Une déformation élastique en flexion de la partie de la dent 7 est donc possible, pratiquement sur toute la longueur de la dent, sans qu'il y ait blocage de cette partie entre la bague 4 et la paroi 2. Ceci est d'autant mieux réalisé, que la largeur de la collerette 9 correspond à celle de la partie plane de la rondelle dentée 3.

Selon un autre mode de réalisation de la présente invention, les moyens d'appui sont constitués par des surépaisseurs prévues sur la rondelle dentée 3, dans une zone annulaire située radialement à l'intérieur des dents : cette zone annulaire est en fait la partie plane de l'exemple de réalisation précédent. Ces surépaisseurs peuvent etre réalisées selon plusieurs modes, et sont situées entre la paroi et la rondelle, c'est-a-dire du même côté de la dent que la pointe de cette dent.

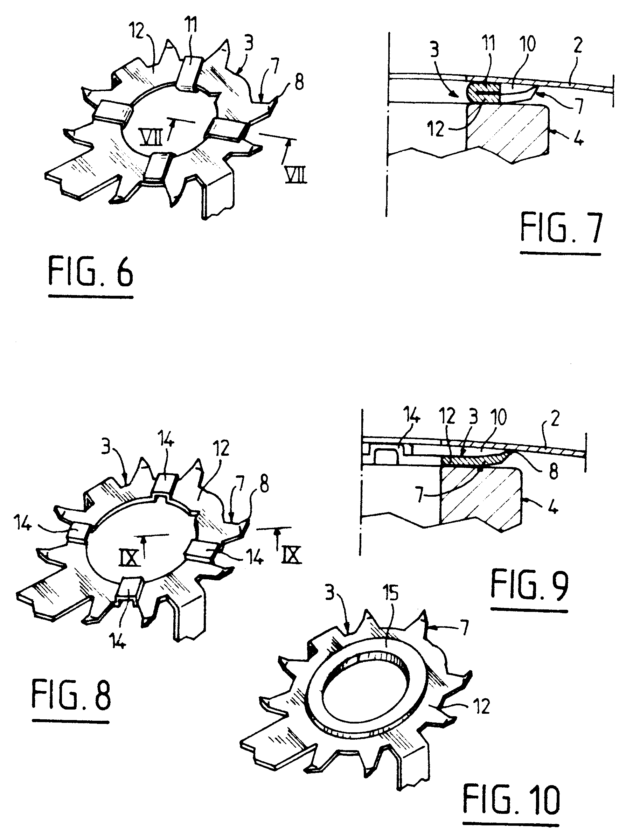

Selon un premier mode décrit aux figures 6 et 7, les surépaisseurs sont constituées par des languettes 11 qui sont solidaires de la rondelle dentée 3 et rabattues contre la partie plane 12 de la rondelle dentée 3. Ces languettes 11 sont reliées au bord de l'ouverture de la rondelle dentée 3 et rabattues vers l'extérieur. Lorsque la rondelle dentée 3 est appliquée contre la tôle 2 par l'organe de serrage 4, comme représenté à la figure 7, il se forme un évidement 10̸ entre la dent 7 et la tôle 2 du fait de l'existence de la languette 11 qui s'interpose entre la partie plane 12 de la rondelle dentée 3 et la tôle 2.

La dent 7 peut donc se déformer élastiquement en flexion.

Selon un deuxième mode de réalisation, représenté aux figures 8, 9 et 10̸, les moyens d'appui peuvent également être constitués par plusieurs , en particulier quatre, zones embouties 14 de la région annulaire 12 de la rondelle dentée 3. Ainsi, en serrant cette rondelle 3 contre la tôle 2, par l'organe de serrage 4, la zone annulaire 12 ne vient pas au contact de la tôle 2, ce qui crée ainsi un évidement 10̸ entre l'organe 4 et la paroi métallique 2.

La zone emboutie peut être continue et par la même constituer une zone emboutie annulaire 15, comme représenté à la figure 10̸ ; cette zone annulaire emboutie 15 est située à la périphérie intérieure de la partie plane 12 de la rondelle dentée 3.

Ainsi qu'il a été dit précédemment, chaque dent 7 comporte une pointe 8 dont l'inclinaison, par rapport au plan moyen de la rondelle dentée 3, est supérieure à l'inclinaison du reste de la dent. En d'autres termes, chaque dent 7 présente deux zones sensiblement planes : la première 16 s'étend entre la partie annulaire 12 de la rondelle 3 et la pointe 8 de la dent, ainsi que l'on peut le voir sur la figure 4, et a une première inclinaison par rapport au plan moyen de la rondelle dentée 3 ; la deuxième zone constitue la pointe 8 elle-même, et a une inclinaison plus importante que la première. Pour fixer les idées, sans se limiter, la première inclinaison est de l'ordre de 30̸° à 45° à peu près, tandis que la seconde est, par exemple, de l'ordre de 5° à 10̸° par rapport à la première.

Bien évidemment, la dent 7 au lieu d'être formée par deux zones formant un angle entre elles, ainsi que par rapport à la partie annulaire 12 de la rondelle dentée 3, peut être de forme courbe, la ligne de courbure correspondant, sensiblement, à l'enveloppe d'une dent constituée par deux zones planes formant un angle entre elles. Ainsi, chaque dent a une ligne moyenne courbe dont la concavité est tournée du côté de la paroi métallique 2.

Ainsi que peut le comprendre aisément l'homme du métier, une rondelle selon la présente invention, destinée à établir un contact de masse avec la paroi métallique 2, permet de réaliser, quel que soit le mode de réalisation de cette rondelle dentée, un ressort pour ce contact tout en perçant la couche protectrice de façon à venir en contact sur la tôle : on peut ainsi éviter les inconvénients présentés par les rondelles de l'art antérieur. Il y aura toujours contact par la pointe de la dent sur la zone griffée et dépourvue de couche isolante, grâce à cette double inclinaison combinée avec l'élasticité.

## Revendications

1. Dispositif pour fixer une embase d'antenne, notamment pour un appareil de télécommunication tel qu'un poste autoradio, sur une paroi métallique (2) recouverte d'une couche protectrice isolante, l'embase d'antenne (1) comprenant une tige (5) propre à traverser un trou de la paroi (2), et le dispositif comprenant une rondelle dentée (3) métallique, traversée par ladite tige (5) et destinée à établir un contact de masse avec ladite paroi (2) métallique, cette rondelle comprenant des dents (7) qui s'étendent radialement, un organe de serrage (4) étant prévu pour maintenir l'ensemble sur ladite paroi (2) en réponse à un effort de traction, exercé sur la tige (5), par un moyen de fixation (6) coopérant avec ladite tige (5), du côté de la paroi (2) opposé à l'embase d'antenne (1), **caractérisé par le fait que** chaque dent (7) de la rondelle dentée (3) présente une pointe (8) dont l'inclinaison, par rapport au plan moyen de la rondelle dentée (3), est supérieure à l'inclinaison du reste de la dent (7), du côté d'application contre la paroi (2), et que des moyens d'appui (9, 11,14 ou 15) sont prévus sur au moins l'un des deux éléments constitués par la rondelle dentée (3) et l'organe de serrage (4), lesdits moyens d'appui ayant une épaisseur telle que, lorsque la rondelle dentée (3) est appliquée contre la paroi (2) un espace libre (10) subsiste entre la paroi (2) et la face en regard dudit organe de serrage (4) afin de permettre une déformation élastique en flexion de la partie de la dent (7) dont l'extrémité se termine par la susdite pointe (8) sans qu'il y ait blocage de cette partie entre l'organe de serrage (4) et ladite paroi (2).

2. Dispositif selon la revendication 1, caractérisé par le fait que la rondelle dentée (3) et l'organe de serrage (4) sont situés du côté de la paroi (2) opposé à l'embase d'antenne (1), et que les dents (7) s'étendent radialement vers l'extérieur, la susdite pointe (8) de chaque dent (7) constituant l'extrémité radiale extérieure de cette dent (7), les moyens d'appui (9, 11, 14, 15) ne débordant pas au-delà de la ligne (L) passant par les racines des dents (7).

3. Dispositif selon la revendication 1 ou 2, caractérisé par le fait que l'organe de serrage comprend une bague (4) en matière isolante, traversée par la tige (5), et que le susdit moyen d'appui est constitué par une collerette (9) faisant saillie parallèlement à la direction axiale, sur la face transversale de la bague (4) tournée vers la rondelle dentée (3), cette collerette (9) étant prévue sur le bord périphérique interne de la bague (4) et étant propre à prendre appui contre la rondelle dentée (3) proprement dite, les dents (7) de la rondelle dentée (3) étant situées radialement à l'extérieur de ladite collerette (9), au niveau d'un évidement annulaire ainsi défini par la collerette (9).

4. Dispositif selon la revendication 1 ou 2, caractérisé par le fait que les moyens d'appui sont constitués par des surépaisseurs (11, 14, 15) prévues sur la rondelle dentée (3), dans une zone annulaire située radialement à l'intérieur des dents (7), et situées entre la paroi (2) et la rondelle (3).

5. Dispositif selon la revendication 4, caractérisé par le fait que les surépaisseurs sont constituées par des languettes (11) solidaires de la rondelle dentée (3) et rabattues contre le plan (12) de la rondelle dentée (3).

6. Dispositif selon la revendication 4, caractérisé par le fait que les languettes (11) sont reliées au bord de l'ouverture de la rondelle dentée (3) et sont rabattues vers l'extérieur.

7. Dispositif selon la revendication 4, caractérisé par le fait que la surépaisseur, constituant moyen d'appui, est formée par au moins une zone emboutie (14) de la région annulaire (12) de la rondelle dentée (3).

8. Dispositif selon la revendication 7, caractérisé par le fait que la zone emboutie forme un anneau circulaire (15).

9. Dispositif selon la revendication 7, caractérisé par le fait que les moyens d'appui sont constitués par plusieurs zones embouties (14), en particulier ouatre, orientées radialement, prévues dans la partie annulaire (12) de la rondelle dentée (3), et situées angulairement entre les dents (7).

10. Dispositif selon l'une quelconque des revendications précédentes, caractérisé par le fait que chaque dent (7) présente deux zones (16 et 8) sensiblement planes, la première zone (16) s'étendant entre la partie annulaire (12) et la pointe (8), et ayant une première inclinaison par rapport au plan moyen de la rondelle dentée, la deuxième zone constituant la pointe (8) et ayant une inclinaison plus importante.

11. Dispositif selon l'une quelconque des revendications 1 à 10̸, caractérisé par le fait que chaque dent (7) de la rondelle dentée (3) a une ligne moyenne courbe, dont la concavité est destinée à être tournée du côté de la paroi (2).

## Patentansprüche

1. Vorrichtung zum Festlegen einer Antennenbasis, insbesondere für ein Telekommunikationsgerät wie z.B. ein Autoradio, an einer mit einer isolierenden Schutzschicht überzogenen metallischen Wand (2), wobei die Antennenbasis (1) einen zum Durchqueren eines Lochs der Wand (2) geeigneten Schaft (5) hat, und wobei die Vorrichtung eine gezahnte metallische Scheibe (3) aufweist, die von dem Schaft (5) durchquert wird und die zum Herstellen eines Massekontakts mit der metallischen Wand (2) bestimmt ist, die Scheibe sich radial erstreckende Zähne (7) aufweist, und ein Klemmorgan (4) vorgesehen ist, um die Einheit ansprechend auf eine auf den Schaft (5) ausgeübte Zugkraft durch eine mit dem Schaft (5) zusammenwirkende Festlegeeinrichtung (6) auf der der Antennenbasis (1) gegenüberliegenden Seite der Wand (2) zu halten, dadurch gekennzeichnet, daß jeder Zahn (7) der gezahnten Scheibe (3) eine Spitze (8) aufweist, deren Neigung, bezogen auf die Mittelebene der gezahnten Scheibe (3) größer ist als die Neigung des restlichen Zahns (7) auf der Anbringseite an der Wand (2), und daß Auflageeinrichtungen (9, 11, 14 oder 15) an wenigstens einem der beiden von der gezahnten Scheibe (3) und dem Klemmorgan (4) gebildeten Elemente vorgesehen sind, wobei die Auflageeinrichtungen eine solche Dicke haben, daß, wenn die gezahnte Scheibe (3) an der Wand (2) anliegt, zwischen der Wand (2) und der gegenüber von dem Klemmorgan (4) befindlichen Fläche ein Freiraum (10) bleibt, damit eine elastische Biegeverformung des Abschnitts des Zahns (7) ermöglicht wird, dessen Ende in der Spitze (8) ausläuft, ohne daß eine Blockierung dieses Abschnitts zwischen dem Klemmorgan (4) und der Wand (2) stattfindet.

2. Vorrichtung nach Anspruch 1, dadurch gekennzeichnet, daß sich die gezahnte Scheibe (3) und das Klemmorgan (4) auf der der Antennenbasis (1) gegenüberliegenden Seite der Wand (2) befinden und daß sich die Zähne (7) radial nach außen erstrecken, wobei die Spitze (8) eines jeden Zahns (7) das äußere radiale Ende dieses Zahns (7) bildet und die Auflageeinrichtungen (9, 11, 14, 15) die Linie L nicht überschreiten, die durch die Füße der Zähne (7) verläuft.

3. Vorrichtung nach Anspruch 1 oder 2, dadurch gekennzeichnet, daß das Klemmorgan einen Ring (4) aus isolierendem Material aufweist, der vom Schaft (5) durchquert wird, und daß die Auflageeinrichtung aus einem Bund (9) besteht, der parallel zur Axialrichtung auf der der gezahnten Scheibe (3) Zugewandten Transversalfläche des Rings (4) vorsteht, wobei dieser Bund (9) auf dem inneren Umfangsrand des Rings (4) vorgesehen ist und zur Abstützung der eigentlichen gezahnten Scheibe (3) geeignet ist, wobei die Zähne (7) der gezahnten Scheibe (3) radial außerhalb des Bundes (9) auf Höhe einer so von dem Bund (9) begrenzten ringförmigen Aussparung liegen.

4. Vorrichtung nach Anspruch 1 oder 2, dadurch gekennzeichnet, daß die Auflageeinrichtungen von Abschnitten mit größerer Dickenerstreckung (11, 14, 15) gebildet werden, die auf der gezahnten Scheibe (3) in einem ringförmigen Bereich vorgesehen sind, der radial innerhalb der Zähne (7) liegt, und zwischen der Wand (2) und der Scheibe (3) angeordnet sind.

5. Vorrichtung nach Anspruch 4, dadurch gekennzeichnet, daß die Abschnitte mit größerer Dickenerstreckung aus an der gezahnten Scheibe (3) befestigten Zungen (11) bestehen, die auf die Ebene (12) der gezahnten Scheibe (3) umgebogen sind.

6. Vorrichtung nach Anspruch 4, dadurch gekennzeichnet, daß die Zungen (11) mit dem Rand der Öffnung der gezahnten Scheibe (3) verbunden und nach außen hin umgebogen sind.

7. Vorrichtung nach Anspruch 4, dadurch gekennzeichnet, daß die die Auflageeinrichtungen bildenden Abschnitte mit größerer Dickenerstreckung aus mindestens einer ausgebauchten Zone (14) des ringförmigen Bereichs (12) der gezahnten Scheibe (3) besteht.

8. Vorrichtung nach Anspruch 7, dadurch gekennzeichnet, daß die ausgebauchte Zone einen Kreisring (15) bildet.

9. Vorrichtung nach Anspruch 7, dadurch gekennzeichnet, daß die Auflageeinrichtungen aus mehreren ausgebauchten Zonen (14), insbesondere vier, bestehen, die radial ausgerichtet im ringförmigen Abschnitt (12) der gezahnten Scheibe (3) vorgesehen sind und winklig zwischen den Zähnen (7) liegen.

10. Vorrichtung nach einem der vorhergehenden Ansprüche, dadurch gekennzeichnet, daß jeder Zahn (7) zwei im wesentlichen ebene Zonen (16 und 8) aufweist, wobei sich die erste Zone (16) zwischen dem ringförmigen Abschnitt (12) und der Spitze (8) erstreckt und eine erste Neigung bezüglich der Mittelebene der gezahnten Scheibe hat, während die zweite Zone die Spitze (8) bildet und eine größere Neigung hat.

11. Vorrichtung nach einem der vorhergehenden Ansprüche 1 bis 10, dadurch gekennzeichnet, daß jeder Zahn (7) der gezahnten Scheibe (3) eine gekrümmte Mittelinie hat, deren Konkavität so bestimmt ist, daß sie der Seite der Wand (2) zugewandt ist.

## Claims

1. Device for fixing an antenna base, notably for a telecommunications apparatus such as a car radio set, to a metal wall (2) covered with an insulating protective layer, the antenna base (1) comprising a rod (5) suitable for passing through a hole in the wall (2), and the device comprising a metal toothed washer (3) with the said rod (5) passing through it, designed to establish earth contact with the said metal wall (2), this washer comprising teeth (7) extending radially, a clamping member (4) being provided for holding the assembly on the said wall (2) in response to a traction force, exerted on the rod (5), by a fixing means (6) cooperating with the said rod (5), on the side of the wall (2) opposite to the antenna base (1), characterised in that each tooth (7) on the toothed washer (3) has a tip (8), the inclination of which, with respect to the mid-plane of the toothed washer (3), is greater than the inclination of the remainder of the tooth (7), on the side of application against the wall (2), and in that bearing means (9, 11, 14 or 15) are provided on at least one of the two components consisting of the toothed washer (3) and the clamping member (4), the said bearing means having a thickness such that, when the toothed washer (3) is applied against the wall (2), a clear space (10) remains between the wall (2) and the opposite face of the said clamping member (4) in order to allow elastic bending deformation of the part of the tooth (7) whose end terminates in the above-mentioned tip (8) without there being any locking of this part between the clamping member (4) and the said wall (2).

2. Device according to Claim 1, characterised in that the toothed washer (3) and the clamping member (4) are situated on the side of the wall (2) opposite to the antenna base (1), and in that the teeth (7) extend radially outwards, the above-mentioned tip (8) of each tooth (7) constituting the outer radial end of this tooth (7), the bearing means (9, 11, 14, 15) not projecting beyond the line (L) passing through the roots of the teeth (7).

3. Device according to Claim 1 or 2, characterised in that the clamping member comprises a ring (4) made from insulating material, with the rod (5) passing through it, and in that the above-mentioned bearing means consists of a collar (9) projecting parallel to the axial direction, on the transverse face of the ring (4) turned towards the toothed washer (3), this collar (9) being provided on the internal peripheral edge of the ring (4) and being suitable for bearing against the toothed washer (3) proper, the teeth (7) on the toothed washer (3) being situated radially outside the said collar (9), at the level of an annular recess thus defined by the collar (9).

4. Device according to Claim 1 or 2, characterised in that the bearing means consist of thicker parts (11, 14, 15) provided on the toothed washer (3), in an annular zone situated radially inside the said teeth (7), and situated between the wall (2) and the washer (3).

5. Device according to Claim 4, characterised in that the thicker parts consist of tongues (11) fixed to the toothed washer (3) and folded back against the surface (12) of the toothed washer (3).

6. Device according to Claim 4, characterised in that the tongues (11) are connected to the edge of the opening of the toothed washer (3) and are folded outwards.

7. Device according to Claim 4, characterised in that the thicker part, constituting a support means, is formed by at least one stamped area (14) of the annular region (12) of the toothed washer (3).

8. Device according to Claim 7, characterised in that the stamped area forms a circular ring (15).

9. Device according to Claim 7, characterised in that the support means consist of several stamped areas (14), in particular four, oriented radially, provided in the annular part (12) of the toothed washer (3) and situated angularly between the teeth (7).

10. Device according to any one of the preceding claims, characterised in that each tooth (7) has two substantially flat areas (16 and 8), the first area (16) lying between the annular part (12) and the tip (8) and having a first inclination with respect to the median plane of the toothed washer, the second area constituting the tip (8) and having a greater inclination.

11. Device according to any one of Claims 1 to 10, characterised in that each tooth (7) on the toothed washer (3) has a curved median line, the concave side of which is intended to be turned towards the wall (2).
